# EUROPÄISCHE PATENTANMELDUNG

(11) **EP 4 707 362 A1**
(43) Veröffentlichungstag der Anmeldung: **11.03.2026**
(21) Anmeldenummer: 25200549.1
(22) Anmeldetag: 05.09.2025
(51) Int. Cl.: C10L 5/02, C10L 5/14, C10L 5/36, C10L 5/44

(54) **VERFAHREN ZUR HERSTELLUNG VON CO2-ARMEN HOLZBRENNSTOFFEN MIT HOHER ENERGIEDICHTE**

(30) Priorität: 05.09.2024 DE 102024125512
(71) Anmelder: ProFagus GmbH, 37194 Bodenfelde (DE)
(72) Erfinder: KOHLE, Thorsten, 37194 Bodenfelde (DE); SEVERIN, Angelo, 37697 Lauenförde (DE)
(74) Vertreter: karo IP

(57) **Zusammenfassung**

Die Erfindung betrifft die Herstellung von CO₂-armen Holzbrennstoffen (z.B. Holzpellets oder Holzbriketts) mit hoher Energiedichte durch die Zugabe von Kohlestaub, wie z.B. Holz-, Stein- oder Braunkohlenstaub, während des Produktionsverfahrens.

## Beschreibung

Die vorliegende Erfindung betrifft die Herstellung von CO₂-armen Holzbrennstoffen mit hoher Energiedichte durch die Zugabe von Kohlestaub, wie z.B. Holz-, Stein-, oder Braunkohlenstaub, während des Produktionsverfahrens.

### Rohstoff Holz:

Holz dient dem Menschen schon seit Urzeiten als Brenn- und Baustoff. Über Jahrtausende hinweg lieferte Holz die notwendige Energie, um frühe Industriezweige zu betreiben und das Überleben in kälteren Witterungen zu ermöglichen. Bis in das moderne Zeitalter hat sich der nachwachsende Rohstoff in verschiedenen Lebensbereichen bewährt. Eine weit verbreitete Anwendung als Brennstoff innerhalb der letzten Jahrzehnte sind z.B. Holzpellets oder Holzbriketts. Holzspäne und -stücke werden üblicherweise mit einem Bindemittel, Wasser und Additiven zu kleinen Stangen gepresst. Als Holzsubstrat werden meistens Nadelhölzer oder andere weiche Holzsorten verwendet, da sie sich im Gegensatz zu Harthölzern verschleißfreier verarbeiten lassen. Holzpellets oder Holzbriketts kommen weltweit als Heizmittel in der Privatwirtschaft zum Einsatz, werden vom Endverbraucher und der Gastronomie aber auch zum Räuchern von Lebensmitteln eingesetzt.

### Rohstoff Kohle:

Kohle entsteht, wenn Biomasse wie beispielweise abgestorbene Pflanzenteile über längere Zeiträume sowohl Druck als auch Temperatur ausgesetzt ist. Je nach fortschreitender Inkohlungsstufe wird Kohle in Holz, Torf, Braunkohle, Steinkohle, Anthrazit oder in seltenen Fällen, Graphit unterschieden. Die drei am häufigsten verwendeten Kohlen sind Steinkohle, Braunkohle und Holzkohle.

Die beiden Kohlesorten Braunkohle und Steinkohle sind Produkte aus der fortgeschrittenen Inkohlung von Biomasse, die in der Natur stattfindet. Die Biomasse wird über oberflächennahe, biochemische Prozesse bei niedrigen Temperaturen zu Torf umgewandelt. Die Inkohlung der Biomasse wird stärker, je tiefer sie in der Erde liegt. Verantwortlich sind höhere Drücke und Temperaturen in tieferen Erdschichten. Dabei entsteht als Erstes Braunkohle. Steigen Drücke und Temperaturen weiter, wird die Biomasse zu Steinkohle umgewandelt. Eine weitere Umwandlung zu Anthrazit kann nur über geochemische Prozesse erfolgen.

Holzkohle kann, im Gegensatz zu Stein- und Braunkohle, aus dem nachwachsenden Rohstoff Holz gewonnen werden. Die Verkohlung von Holz wird als trockene Destillation von Holz bezeichnet. Der Verkohlungsprozess findet unter Ausschluss von Sauerstoff statt. Holz kann in verschiedenen Variationen, wie etwa in Form von Spänen, Stücken oder Mehl, bei bis zu 550 °C pyrolysiert werden. Die Holzkohle wird anschließend für verschiedene industrielle und privatwirtschaftliche Anwendungen verwendet. Je nach Betriebsweise des Verkohlungsprozesses fallen weiterhin flüssige Nebenprodukte an wie Alkohole (Methanol, Ethylenglykol), Säuren (Essigsäure, Ameisensäure, Propionsäure), Holzöle und Teeröle. Eine nachhaltige Verkohlung von Holz sieht die Nutzbarmachung von allen Haupt- und Nebenerzeugnissen vor.

Holzpellets und Holzbriketts unterscheiden sich im Wesentlichen nur in der Form bzw. Geometrie und in den Abmessungen. Ein Holzpellet besitzt meist eine kleine, zylindrische Geometrie mit Durchmessern um die 6 mm und Längen bis zu etwa 3 cm. Ein Holzbrikett ist in seiner Geometrie deutlich größer und kann auch unterschiedliche Formen haben. Am weitesten verbreitet sind zwei Varianten:
- Zylindrische Briketts, die einen Durchmesser zwischen z.B. 3 cm und 10 cm besitzen und z.B. bis zu 30 cm lang sein können. Die Form kann z.B. rund, vier- oder achteckig sein. Das Äußere der Briketts besitzt manchmal eine dunkle Farbe, was von der Herstellungsmethode herrührt.
- Quaderförmige Briketts: Die Geometrien können hier je nach Maschinenhersteller variieren, gängige Größen sind 15 cm x 6 cm sowie 24 cm x 7 cm bis zu ca. 10 cm.

Zur Herstellung von Holzpellets sollte das Ausgangsmaterial relativ sauber und homogen sein, weswegen oft Holzstaub und Späne aus Sägewerken verwendet werden.

Zur Herstellung von Holzbriketts dagegen können auch größere Holzstücke bis üblicherweise z.B. 10 mm, bei Weichholz auch z.B. 20 mm, verwendet werden. Eine Homogenisierung des Materials kann vorteilhaft sein, üblicherweise auf kleine Schnitzel zu z.B. 10 mm Größe, sofern weder Holzspäne oder Holzstaub verwendet werden. Bei der Herstellung von Holzbriketts ist nicht unbedingt ein Binder notwendig, da Druck und Temperatur meist ausreichen, um die Bindewirkung des Lignins im Holz zu aktivieren. Selbstverständlich kann aber ein handelsüblicher Binder verwendet werden, wenn dies erwünscht oder erforderlich ist.

Im Folgenden wird beispielhaft die Herstellung von Holzpellets beschrieben. Diese kann auf unterschiedliche Arten erfolgen. Industrietypisch erfolgt die Herstellung aus Holzspänen, Wasser und pflanzlichem Bindemittel. Die Holzspäne sollten dabei vor der Verarbeitung bei Temperaturen zwischen 60 °C und 90 °C getrocknet werden. Um den Eintrag von Metallen, Steinen und unerwünschten Fremdstoffen zu vermeiden, erfolgt eine Separation von allen Fremdmaterialien. Anschließend erfolgt die Zerkleinerung mittels Mahltechniken auf Korngrößen kleiner 6 mm. Um aus den Spänen eine verarbeitbare Masse herzustellen, werden Wasser und pflanzenbasierte Stärke zugegeben. Industrietypisch sind

Feuchtigkeitsgehalte von 10 % bis 15 % sowie Bindemittelanteile von maximal 2 %. Nachdem das Wasser homogen in die gesamte Rohmasse eingedrungen ist, werden die Pellets in einer geeigneten Presse hergestellt. Industrietypisch werden Matrizenpressen verwendet, bei denen durch Reibungswärme Temperaturen von ca. 110 °C und pro Matrizenbohrung theoretische Drücke von ca. 20 Tonnen erreicht werden. Dabei wird das in den Zellen des Holzes befindliche Biopolymer Lignin als Klebstoff aktiviert, welches in Gegenwart von Wasser als eigenständiges Bindemittel wirkt. Im letzten Schritt erfolgt das Abkühlen. Während der darauffolgenden Schritte von Lagerung bis Transport erfolgt das stetige Aussieben von Feinanteilen, um die Staubmengen für den Endverbraucher zu minimieren.

Auf dem Sachgebiet der Holzpellets erfolgen stetige Weiterentwicklungen, sowohl im technischen als auch materialwissenschaftlichen Bereich. Technische Weiterentwicklungen zeigen sich zum Beispiel in EP3010693B1, in der die Überwachung, Probennahme sowie Steuerung der Pellet-Herstellung verbessert wurde. Andere Ansätze verfolgen das Optimieren durch Zugabe von Additiven, um beispielsweise die Produktionsraten zu erhöhen. Die ersonnenen Erfindungen reichen von der Verwendung von Mischungen aus Wachsemulsionen und Lignosulfaten wie in US4612017, über verschiedenen Fraktionen aus Tallölen in US1662387B2 bis hin zur Verwendung von Abfallstoffen der Kaffee-Industrie wie in US2020/0262100A1.

Vielen dieser Erfindungen liegt das Prinzip zugrunde, dass die Additive als Schmiermittel wirken. Dadurch wird zum einen die Schmierung der Maschinenbauteile erhöht, zum anderen dem Anhaften der Pellet-Rohmasse an diesen vorgebeugt. Das Resultat sind höhere Durchsätze aber auch die Verbesserung der Bindekraft, was zu weniger Anteilen von Fein- und Bruchfraktionen führt (US4612017). Erfindungen wie US2006/0037236A1 verwenden neben Schmiermitteln auch Holzöl, um aromatisierte Pellets für die Verwendung beim Räuchern von Fleisch zu erzeugen. Den Pellets selbst können dabei, wie in US5427804 beschrieben, Holzkohlebriketts als ergänzendes Brennmaterial zugegeben werden. Beim Grillen wird so eine zusätzliche Räucherwirkung erzeugt, ohne einen Pellet-Räucherofen zu verwenden.

Die Herstellung von Holzpellets oder Holzbriketts mit höherer Energiedichte ist in der aktuellen Zeit ein relevantes Thema. Eine Möglichkeit stellt die Zugabe von Monolignol-basierten Biopolymeren dar, wie sie in US11618862B2 verwendet wurden. Monolignol-basierte Biopolymere basieren auf extrahierten Ligninfraktionen aus Holz. Die Biopolymere werden bei 149 °C bzw. 300 °F auf den getrockneten Holzrohstoff imprägniert. Die Mischungsverhältnisse reichen von 30 % bis 70 % Biopolymer, der Holzrohstoff muss vor der Imprägnierung eine Restfeuchte von 5 % bis 7 % aufweisen. Anschließend wird das beladene Holz handelsüblich zu Pellets verarbeitet. Die Erfinder stellten fest, dass verschiedene Charakteristika verbessert werden. Eigenschaften wie Wasser- und UV-Resistenzen sowie Verbrennungseigenschaften konnten verbessert werden. Eine weitere Möglichkeit zur Steigerung dieser Charakteristika ist die Zumischung von Holzkohle. Wie Garcia et al. (Renewable Energy 180 (2021), 850 - 859) zeigten, führt die Zugabe von Glycerol als Schmiermittel und Eukalyptuskohle als Additiv zu stabileren Pellets. Die Resistenz gegen Reibung, Mahlung und Wasser konnte effektiv erhöht werden. Pellets, die 20 % Eukalyptuskohle und 4 % Glycerin enthielten, wiesen Brennwerte von 20.0 MJ/kg, Energiedichten von 13.3 GJ/m³ sowie Partikeldichten von 1.24 g/cm³ auf. Glycerol wirkt gemäß den Autoren gleichermaßen als Schmier- und Bindemittel.

Zur Herstellung von Holzbriketts kommt insbesondere eines der folgenden drei Verfahren zum Einsatz:
- Presskammerverfahren (hydraulisch): Das Material wird auf 10-15% Restfeuchte getrocknet und über eine Förderschnecke vom Vorbehälter in die Presskammer gefüllt. Dort wird das Material bei 60°C mit einem Druck von bis zu 1.700 kg/cm² in die jeweilige Form gepresst. Bei Bedarf, wie z.B. Hartholz, wird ein Vorverdichter verwendet und zweistufig verdichtet. Ist der Zieldruck in der Presskammer erreicht, wird die Pressvorrichtung geöffnet und der Quader ausgestoßen. Der Prozess beginnt erneut.

- Extruderpressverfahren (mechanisch): Das Material wird auf 10-15% Restfeuchte getrocknet und über eine Förderschnecke bei hohem Druck durch eine Endlos-Matrize gedrückt. Dabei wird das Material mit bis zu 1.050 bar und rund 150°C durch die Matrize gepresst. Wahlweise kann das Material ein Loch in der Mitte haben, durch das entstehende Gase entweichen können und sich das Material auch ausdehnen kann. Nach der Matrize erfolgt das Zusägen in die gewünschten Stückgrößen. Die Briketts werden durch den Produktionsprozess von außen leicht angesengt, haben dadurch eine typische dunkelbraune Färbung und riechen daher etwas nach verbranntem Holz.
- Exzenterverfahren (mechanisch): Das Material wird auf 10-15% Restfeuchte getrocknet und über eine Förderschnecke in eine kleine Kammer befördert. Mittels eines Schwungrads drückt/presst/verdichtet ein Kolben mit einem Druck bis zu 1.200 bar die Holzspäne fortlaufend nach vorne hin in einen runden Kanal. Die Stangen werden ausgestoßen und in einem nachgelagerten Prozessschritt zugeschnitten. Bei dem Prozess entstehen Temperaturen zwischen 70°C und 180°C, weswegen auch diese Briketts optisch dunkler sind.

Hiervon ausgehend ist es Aufgabe der vorliegenden Erfindung, die mit Bezug auf den Stand der Technik genannten Probleme durch die Bereitstellung von CO₂-armen Holzbrennstoffen wie Holzpellets oder Holzbriketts mit hoher Energiedichte zumindest teilweise zu lindern.

Hierzu trägt ein Verfahren mit den Schritten des Anspruchs 1 bei. Vorteilhafte und/oder bevorzugte Ausführungsformen des hier vorgeschlagenen Verfahrens sind Gegenstand der Unteransprüche. Die Beschreibung erläutert die Erfindung und gibt weitere Ausführungsbeispiel an. Die in den Ansprüchen genannten Merkmale/Schritte können miteinander und/oder mit Sachverhalten der Beschreibung kombiniert werden, wodurch noch weiter spezifizierte Ausgestaltungen aufgezeigt werden können.

Die vorliegende Erfindung basiert auf der überraschenden Erkenntnis, dass durch die Verwendung von feinfraktionierter Kohle als Additiv eine signifikante Erhöhung der Energiedichte von Holzpellets oder Holzbriketts erreicht werden kann.

Es wird ein Verfahren zur Herstellung von Holzbrennstoffen (wie Holzpellets oder Holzbriketts), insbesondere mit hoher Energiedichte, vorgeschlagen, bei dem man:
a) Rohholzmaterialpartikel mit bis zu 50 Gew.-%, bezogen auf das Rohholzmaterial, mindestens einer feinfraktionierten Kohle (z.B. Holzkohlestaub) mit einer Korngröße von 100 µm bis 2.000 µm und optional einem Bindemittel zum Erhalt eines Feststoffgemisches vermengt,
b) das Feststoffgemisch mit Wasser zum Erhalt eines feuchten Feststoffgemisches vermengt,
c) das (optional erhitzte) feuchte Feststoffgemisch in einer Presse zu Holzbrennstoff-Rohlingen (z.B. Pellet- bzw. Brikett-Rohlingen) verpresst, und
d) die Holzbrennstoff-Rohlinge (z.B. Pellet- bzw. Brikett-Rohlinge) durch Abkühlung aushärten lässt.

Bezüglich Schritt a) ist bevorzugt, dass der Anteil der Rohholzmaterialpartikel 15 bis 40 Gew.-%, bezogen auf das Rohholzmaterial beträgt.

Bezüglich Schritt a) kann (insbesondere in Kombination mit dem vorstehenden, bevorzugten Rohholzmaterialpartikelanteil) vorgegeben sein, dass feinfraktionierten Kohle (z.B. Holzkohlestaub) mit einer Korngröße von 500 µm bis 1.200 µm eingesetzt wird.

Im Falle von Holzpellets kann in Schritt c) optional, z.B. mittels Wasserdampf, auf z.B. 80°C erhitzt werden. Das Verpressen kann z.B. bei Matrizendrücken von z.B. ca. 20 Tonnen (z.B. bei 6-8 mm Matrizenbohrungen) erfolgen.

Im Falle von Holzbriketts kann das Verpressen z.B. unter Anwendung eines der oben beschriebenen Verfahren zur Herstellung von Holzbriketts erfolgen, die Reaktionsparameter sind z.B.:
- bei Anwendung des Presskammerverfahrens: Restfeuchte z.B.10-15 %, ca. 60°C, bis etwa 1.700 kg/cm² Druck
- bei Verwendung des Extruderpressverfahrens: Restfeuchte ca. 10-15%, ca. 150°C, bis zu 1.050 bar Druck
- bei Anwendung des Exzenterverfahrens: 10-15% Restfeuchte, ca. 70 bis 180°C, bis zu 1.200 bar Druck

Im Folgenden wird die Erfindung detailliert beschrieben, wobei die offenbarten konkreten Ausführungsformen der Erfindung, Beispiele oder Ergebnisse lediglich zur Veranschaulichung dienen sollen und keinesfalls als Einschränkung des Schutzbereichs der Erfindung, wie dieser in den beigefügten Ansprüchen definiert ist, zu interpretieren sind.

Sofern nicht anders definiert, haben alle hier verwendeten technischen und wissenschaftlichen Begriffe die gleiche Bedeutung, wie sie von einem Fachmann auf dem technischen Gebiet der Erfindung verstanden werden. Dabei kann der Fachmann auch auf die einleitenden Erläuterungen vollumfänglich Bezug nehmen.

Die Verwendung von bestimmten bzw. unbestimmten Artikeln ("der", "die", "das", "ein", "eine"), ist (insbesondere im Zusammenhang mit den Ansprüchen) so zu verstehen, dass davon mindestens ein Element bzw. eine Komponente umfasst sein soll, sofern hier nichts anderes angegeben ist oder sich durch den Kontext eindeutig etwas anderes ergibt.

Der Konjunktion "oder" ist als einschließendes und nicht als ausschließendes "oder" zu verstehen, d. h. als "und/oder", sofern hier nichts anderes angegeben ist oder sich durch den Kontext eindeutig etwas anderes ergibt.

Die Verwendung von Begriffen wie "zum Beispiel", "z.B.", "wie" oder Abwandlungen davon soll lediglich zur besseren Veranschaulichung der Erfindung dienen und darf keinesfalls als Einschränkung des Schutzbereichs der Erfindung, wie er in den beigefügten Ansprüchen definiert ist, interpretiert werden.

Sämtliche numerischen Werte verstehen sich, unabhängig davon, ob dies ausdrücklich angegeben ist oder nicht, als "ungefähre" Werte (zumindest im Rahmen der üblichen Fehlertoleranzen). Die Angabe von Wertebereichen dient zudem lediglich zur Abkürzung und bezieht sich, sofern hier nicht anderes angegeben ist, auf jeden einzelnen Wert, der in den Bereich fällt, auch wenn dieser Wert nicht individuell angegeben wird.

Die in Schritt a) des Verfahrens zur Herstellung von Holzbrennstoffen (z.B. Holzpellets oder Holzbriketts) mit hoher Energiedichte eingesetzten Rohholzmaterialpartikel unterliegen hinsichtlich Material und Partikelgröße bzw. Partikelgrößenverteilung keinen besonderen Beschränkungen, solange damit eine Pelletierung bzw. Brikettierung möglich ist. Beispiele für geeignete Rohholzmaterialien sind Hart- und Weichhölzer der Familien Nadelholz und Laubholz (wie Buchen, Eichen, Eschen, Ahorn, Tannen, Kiefern, Fichten) oder auch Kokosnussschalen. Es können auch Kombinationen aus verschiedenen Rohholmaterialien eingesetzt werden.

Die Rohholzmaterialien können beispielsweise in Form von Einzelstücken, Spänen, Granulat, Gries, Mehl oder Staub oder auch Kombinationen daraus eingesetzt werden. Die eingesetzten Rohholzmaterialien, insbesondere der vorstehenden Gestalt, können beispielsweise eine Partikelgröße bis zu 6 mm aufweisen. Das eingesetzte Granulat kann z.B. eine Partikelgröße bis etwa 800 µm aufweisen. Als Stäube kann sowohl Feinstäube mit einer Partikelgröße kleiner als etwa 10 µm als auch Grobstäube mit einer Partikelgröße größer als etwa 10 µm (z.B. bis etwa 300 µm) eingesetzt werden.

Vor der Durchführung des Verfahrens können die Rohholzmaterialpartikel getrocknet werden. Dem Fachmann ist klar, dass die Trocknungstemperatur und - dauer keinen besonderen Beschränkungen unterliegt, solange der Zweck erreicht wird. Beispielsweise kann je nach Feuchtigkeitsgehalt der Rohholzmaterialpartikel bei etwa 60 °C bis 90 °C getrocknet werden (z.B. bei 60 °C, 70 °C, 80 °C, 90 °C). Es sind aber auch darunter oder darüber liegende Temperaturen möglich. Die Trocknungsdauer kann beispielsweise etwa 4 h bis 8 h betragen (z.B. 4 h, 5 h, 6 h, 7 h, 8 h). Es sind aber auch kürzere oder längere Trocknungszeiträume möglich. Dem Fachmann ist klar, dass bei einer höheren Trocknungstemperatur eine kürzere Trocknungsdauer ausreichen kann und umgekehrt eine längere Trocknungsdauer bei einer niedrigeren Trocknungstemperatur erforderlich sein kann.

Die (gegebenenfalls vorher getrockneten) Rohholzmaterialpartikel werden in einem ersten Schritt des Verfahrens mit bis zu etwa 50 Gew.-% (z.B. 5 Gew.-%, 10 Gew.-%, 15 Gew.-%, 20 Gew.-%, 25 Gew.-%, 30 Gew.-%, 35 Gew.-%, 40 Gew.-%, 45 Gew.-%, 50 Gew.-%), bezogen auf das Rohholzmaterial, mindestens einer feinfraktionierten Kohle mit einer Korngröße von etwa 100 µm bis 2000 µm [Mikrometer] (z.B. 100 µm, 200 µm, 300 µm, 400 µm, 500 µm, 600 µm, 700 µm, 800 µm, 900 µm, 1000 µm, 1100 µm, 1200 µm, 1300 µm, 1400 µm, 1500 µm, 1600 µm, 1700 µm, 1800 µm, 1900 µm, 2000 µm), zum Erhalt eines Feststoffgemisches vermengt. Es können auch mehr als 50 Gew.-% feinfraktionierte Kohle und Kohle mit höheren Partikelgrößen als 2000 µm verwendet werden, jedoch ist dies aus verschiedenen (z.B. wirtschaftlichen) Gründen nicht unbedingt zweckmäßig.

Die feinfraktionierte Kohle unterliegt als solche keinen besonderen Beschränkungen. Beispielsweise kann es sich um Holzkohle von Hart- oder Weichhölzern der Familien Nadelholz und Laubholz (wie Buchen, Tannen, Kiefern, Fichten) oder auch von Kokosnussschalen handeln. Auch Braunkohle und Steinkohle sind geeignet. Selbstverständlich können auch Kombinationen aus verschiedenen Kohlen eingesetzt werden.

Beispielsweise wird in einer Ausführungsvariante dem getrockneten Rohholzmaterial Buchenholzkohlegries mit einer Korngröße von 500 µm bis 2000 µm, insbesondere 500 µm bis 1.200 µm, [Mikrometer] beigemischt.

In einer weiteren Ausführungsform der Erfindung wird dem getrockneten Rohholzmaterial bis zu 50 Gew.-%, insbesondere 15 Gew.-% bis 40 Gew.-%, Buchenholzkohlestaub mit einer Korngröße von 100 µm bis 500 µm, oder 500 µm bis 1.200 µm, beigemischt.

Optional kann dem erhaltenen Feststoffgemisch aus Rohholzmaterial und feinfraktionierter Kohle ein Bindemittel zur Verbesserung der Pelletierbarkeit zugesetzt werden. Das Bindemittel unterliegt an sich keinen besonderen Beschränkungen, solange es seinen Zweck erfüllt. Aus ökologischen Gründen kann beispielsweise eine pflanzliche Stärke (wie Weizenstärke, Maisstärke, Erbsenstärke oder auch Kombinationen daraus) verwendet werden. Das Bindemittel kann in einem Anteil von bis zu etwa 5 Gew.-% (z.B. 0.5 Gew.-%, 1 Gew.-%, 1.5 Gew.-%, 2 Gew.-%, 2.5 Gew.-%, 3 Gew.-%, 3.5 Gew.-%, 4 Gew.-%, 4.5 Gew.-%, 5 Gew.-%) verwendet werden. Es können auch mehr als 5 Gew.-% Bindemittel verwendet werden, jedoch ist dies aus verschiedenen (z.B. wirtschaftlichen) Gründen nicht unbedingt zweckmäßig.

Zum Vermengen der Rohholzmaterialpartikel, der feinfraktionierten Kohle und des optionalen Bindemittels kann ein beliebiger (z.B. handelsüblicher) Mischer eingesetzt werden, z.B. ein Paddelmischer.

Anschließend bzw. später wird das Feststoffgemisch aus Rohholzmaterialpartikeln, feinfraktionierter Kohle (und optionalem Bindemittel) in Schritt b) des erfindungsgemäßen Verfahrens mit Wasser zum Erhalt eines feuchten Feststoffgemisches vermengt. Die zugesetzte Wassermenge unterliegt an sich keinen besonderen Beschränkungen. Bevorzugt wird beispielsweise ein Gesamtfeuchtegehalt des Feststoffgemisches von etwa 5 Gew.-% bis etwa 25 Gew.-% eingestellt (z.B. 5 Gew.-%, 6 Gew.-%, 7 Gew.-%, 8 Gew.-%, 9 Gew.-%, 10 Gew.-%, 12 Gew.-%, 15 Gew.-%, 18 Gew.-%, 20 Gew.-%, 22 Gew.-%, 25 Gew.-%).

Optional können in Schritt a) oder Schritt b) des Verfahrens bis zu etwa 5 % mindestens eines Diols (z.B. 1,2-Ethylenglycol, 1,2-Propylenglykol) und/oder mindestens eines Polyols (z.B. Glycerol) zur Verbesserung der Schmierung beigemengt werden. Es kann auch mehr als 5 Gew.-% Diol/Polyol verwendet werden, jedoch ist dies aus verschiedenen (z.B. wirtschaftlichen) Gründen nicht unbedingt zweckmäßig.

Anschließend oder später wird das erhaltene feuchte Feststoffgemisch in Schritt c) des erfindungsgemäßen Verfahrens in einer Presse, z.B. mittels rotierendem Kollerrad durch eine Lochmatrize (ca. 20 Tonnen Druck pro Bohrung mit z.B. 6-8 mm Durchmesser) zu Holzpellet-Rohlingen oder z.B. unter Anwendung des Presskammerverfahrens, unter Verwendung des Extruderpressverfahrens oder unter Anwendung des Exzenterverfahrens zu Holzbriketts verpresst.

Schließlich werden in Schritt d) des Verfahrens die Pellet- bzw. Brikett-Rohlinge durch Abkühlung aushärten gelassen. Dem Fachmann ist klar, dass die Aushärtung keinen besonderen Bedingungen in Bezug auf Abkühltemperatur und erforderliche Abkühldauer unterliegt. Bei niedrigen Abkühltemperaturen (z.B. in einer Kühleinrichtung) kann eine kürzere Abkühldauer ausreichen und umgekehrt kann eine längere Abkühldauer zum Beispiel bei Raumtemperatur (z.B. 18 °C bis 25 °C) erforderlich sein. Nach einer Ausführungsform der Erfindung erfolgt die Abkühlung bei Raumtemperatur.

In den folgenden Beispielen wird das erfindungsgemäße Verfahren anhand der Holzpellet-Herstellung näher erläutert. Diese Beispiele sollen nur zur Veranschaulichung der Erfindung dienen und dürfen keinesfalls als Einschränkung des Schutzbereichs der Erfindung, wie er in den beigefügten Ansprüchen definiert ist, interpretiert werden.

Die Prozentangaben in den folgenden Beispielen beziehen sich jeweils auf das Gewicht der Gesamtmischung vor dem Pressen.

### Beispiel 1:

Die Energiedichte eines Pellets kann erheblich durch die Zugabe von Kohlefraktionen gesteigert werden. Eine Zusammensetzung von 6720 g getrockneten Kiefernspänen, 750 g Buchenholzkohlestaub und 30.0 g Erbsenschrot (0.4 Gew.-%) wird mit 2500 g Wasser vermischt und ergibt ein hell gräuliches Rohmaterial. Das Rohmaterial wurde zu stabilen Pellets gepresst, die durch Auskühlung bei Raumtemperatur aushärteten. Die festen Hochenergiepellets besitzen einen Heizwert HUB von 4.67 kWh/kg.

### Beispiel 2:

Eine Zusammensetzung von 5940 g getrockneten Kiefernspänen, 1500 g Buchenholzkohlestaub und 60.0 g Erbsenschrot (0.8 Gew.-%) wird mit 2500 g Wasser vermischt und ergibt ein gräuliches Rohmaterial. Das Rohmaterial wurde zu stabilen Pellets gepresst, die durch Auskühlung bei Raumtemperatur aushärteten. Die festen Hochenergiepellets besitzen einen Heizwert HUB von 5.11 kWh/kg.

### Beispiel 3:

Eine Zusammensetzung von 5160 g getrockneten Kiefernspänen, 1500 g Buchenholzkohlestaub und 90.0 g Erbsenschrot (1.2 Gew.-%) wird mit 2500 g Wasser vermischt und ergibt ein graues Rohmaterial. Das Rohmaterial wurde zu stabilen Pellets gepresst, die durch Auskühlung bei Raumtemperatur aushärteten. Die festen Hochenergiepellets besitzen einen Heizwert HUB von 5.89 kWh/kg.

### Beispiel 4:

Eine Zusammensetzung von 4380 g getrockneten Kiefernspänen, 3000 g Buchenholzkohlestaub und 120.0 g Erbsenschrot (1.6 Gew.-%) wird mit 2500 g Wasser vermischt und ergibt ein dunkelgraues Rohmaterial. Das Rohmaterial wurde zu stabilen Pellets gepresst, die durch Auskühlung bei Raumtemperatur aushärteten. Die festen Hochenergiepellets besitzen einen Heizwert HUB von 6.11 kWh/kg.

### Beispiel 5:

Eine Zusammensetzung von 3600 g getrockneten Kiefernspänen, 3750 g Buchenholzkohlestaub und 150.0 g Erbsenschrot (2.0 Gew.-%) wird mit 2500 g Wasser vermischt und ergibt ein schwarzes Rohmaterial. Das Rohmaterial wurde zu stabilen Pellets gepresst, die durch Auskühlung bei Raumtemperatur aushärteten. Die festen Hochenergiepellets besitzen einen Heizwert HUB von 6.14 kWh/kg.

### Referenz ohne Kohlezugabe:

Eine Zusammensetzung von 7470 g getrockneten Kiefernspänen und 30.0 g Erbsenschrot (0.4 Gew.-%) wird mit 2500 g Wasser vermischt und ergibt ein holzfarbenes Rohmaterial. Das Rohmaterial wurde zu stabilen Pellets gepresst, die durch Auskühlung bei Raumtemperatur aushärteten. Die festen Hochenergiepellets besitzen einen Heizwert HUB von 4.61 kWh/kg.

### Messung der Leistung der erfindungsgemäßen Produkte

### Physikalische Parameter:

Die physikalischen Parameter wurden mittels Standardmethoden und Standardanalytik bestimmt. Die Kohlenstoff- und Asche-Gehalte der erfindungsgemäßen Holzpellets erhöhen sich wie erwartet bei einer Zugabe von Kohle auf bis zu 1.3 Gew.-% bzw. 1.4 Gew.-% TS (Trockensubstanz). Feuchte- und Wasser-Gehalt variieren und schwanken zwischen 6.6 Gew.-% und 15.8 Gew.-%. Die flüchtigen Bestandteile verringern sich bei Zugabe von Kohle, da sich der Anteil organischer Bestandteile in den Pellets durch die Substitution mit Kohle verringert.

**Tabelle 1:**

| | **Referenz** | **Beispiel 1** | **Beispiel 2** | **Beispiel 3** | **Beispiel 4** | **Beispiel 5** |
|---|---|---|---|---|---|---|
| **Kohleanteil (Gew.-%)** | 0.0 | 10.0 | 20.0 | 30.0 | 40.0 | 50.0 |
| **KohlenstoffGehalt (Gew.-%)** | 16.5 | 22.1 | 30.0 | 37.1 | 44.2 | 50.7 |
| **Asche-Gehalt (Gew.-%)** | 0.4 | 0.5 | 0.8 | 0.8 | 1.0 | 1.3 |
| **Asche-Gehalt (Gew.-% TS)** | 0.6 | 0.5 | 0.8 | 0.9 | 1.1 | 1.4 |
| **FeuchteGehalt (Gew.-%)** | 10.6 | 10.8 | 7.0 | 8.6 | 9.7 | 6.7 |
| **Wasser-Gehalt (Gew.-%)** | 12.3 | 15.8 | 7.3 | 9.0 | 10.4 | 6.6 |
| **Flüchtige Bestandteile (Gew.-%)** | 83.2 | 77.4 | 69.4 | 62.2 | 55.0 | 48.5 |

### Elementarzusammensetzung:

Die Elementarzusammensetzung der Holzpellets wurde gemäß DIN EN ISO 16948:2015-09 bestimmt. Aus den Ergebnissen geht hervor, dass die erfindungsgemäßen Holzpellets hauptsächlich aus Kohlenstoff, Sauerstoff und Wasserstoff bestehen. Der Anteil an Sauerstoff und Wasserstoff verringert sich bei der Zugabe von Kohle, wohingegen sich der Anteil elementaren Kohlenstoffs erhöht. Diese Ergebnisse sind schlüssig und kohärent. Elementarer Stickstoff ist mit einem Anteil von 0.1 Gew.-% bis 0.3 Gew.-% in den erfindungsgemäßen Holzpellets enthalten. Der maximal nachweisbare Anteil an Schwefel lag bei 0.017 Gew.-%.

**Tabelle 2:**

| | **Referenz** | **Beispiel 1** | **Beispiel 2** | **Beispiel 3** | **Beispiel 4** | **Beispiel 5** |
|---|---|---|---|---|---|---|
| **Schwefel (Gew.-%)** | 0.010 | 0.009 | 0.009 | 0.015 | 0.015 | 0.009 |
| **Schwefel (Gew.-% TS)** | 0.012 | 0.010 | 0.010 | 0.016 | 0.017 | 0.010 |
| **Stickstoff (Gew.-%)** | 0.18 | 0.10 | 0.21 | 0.22 | 0.26 | 0.25 |
| **Stickstoff (Gew.-% TS)** | 0.21 | 0.12 | 0.22 | 0.24 | 0.29 | 0.27 |
| **Kohlenstoff (Gew.-%)** | 46.1 | 45.0 | 53.8 | 56.3 | 58.8 | 62.6 |
| **Kohlenstoff (Gew.-% TS)** | 54.8 | 51.3 | 58.0 | 61.9 | 65.7 | 67.0 |
| **Wasserstoff (Gew.-%)** | 5.0 | 5.3 | 5.2 | 4.9 | 4.4 | 4.4 |
| **Wasserstoff (Gew.-% TS)** | 5.9 | 6.0 | 5.6 | 5.3 | 4.9 | 4.7 |
| **Sauerstoff (Gew.-%)** | 32.4 | 36.9 | 32.7 | 28.7 | 25.1 | 24.8 |
| **Sauerstoff (Gew.-% TS)** | 38.4 | 42.1 | 35.3 | 31.6 | 28.0 | 26.6 |

### Verbrennungseigenschaften:

Die Berechnung der Verbrennungseigenschaften erfolgte gemäß DIN EN ISO 18125:2017-08. Die Zugabe von Buchenholzkohlestaub verbessert im Vergleich zur Referenz graduiert sowohl den Brennwert als auch den Heizwert. Eine Zugabe von 10 Gew.-% Holzkohlestaub führte zu einer relativen Verringerung bezogen auf die Trockensubstanz TS. Ab einem Anteil von 20 Gew.-% Buchenholzkohlestaub erhöhen sich sowohl Brennwert als auch Heizwert signifikant. So konnte mit Beispiel 4 bei einem Anteil von 40 Gew.-% Buchenholzkohle eine relative Erhöhung des Brennwertes um 22.0 % sowie 24.4 % für den Heizwert erzielt werden, bezogen auf die Trockensubstanz. Eine Erhöhung des Anteiles an Holzkohlestaub kann die Zugabe von Holzölen, Holzteer und größere Mengen Bindemittel erforderlich machen, um reibungslose Produktionsprozesse zu gewährleisten.

**Tabelle 3:**

| | **Referenz** | **Beispiel 1** | **Beispiel 2** | **Beispiel 3** | **Beispiel 4** | **Beispiel 5** |
|---|---|---|---|---|---|---|
| **Brennwert (kJ/kg)** | 18000 | 18200 | 19700 | 22500 | 23400 | 23300 |
| **Brennwert (kJ/kg TS)** | 21400 | 20700 | 21300 | 24700 | 26100 | 24900 |
| **Heizwert HuB (kJ/kg)** | 16600 | 16800 | 18400 | 21200 | 22000 | 22100 |
| **Heizwert HuB (kJ/kg TS)** | 20100 | 19400 | 20100 | 23600 | 25000 | 23900 |
| | | | | | | |
| **Brennwert (kWh/kg)** | 5.00 | 5.06 | 5.47 | 6.25 | 6.50 | 6.47 |
| **Brennwert (kWh/kg TS)** | 5.94 | 5.75 | 5.92 | 6.86 | 7.25 | 6.92 |
| **Heizwert HuB (kWh/kg)** | 4.61 | 4.67 | 5.11 | 5.89 | 6.11 | 6.14 |
| **Heizwert HuB (kWh/kg TS)** | 5.58 | 5.39 | 5.58 | 6.56 | 6.94 | 6.64 |

| **Änderung Δ im Vergleich zur Referenz:** | | | | | | |
|---|---|---|---|---|---|---|
| **Δ Brennwert (%)** | 0.0 | 1.1 | 9.4 | 25.0 | 30.0 | 29.4 |
| **Δ Brennwert (% TS)** | 0.0 | -3.5 | -0.5 | 15.4 | 22.0 | 16.4 |
| **Δ Heizwert HuB (%)** | 0.0 | 1.2 | 10.8 | 27.7 | 32.5 | 33.1 |
| **Δ Heizwert HuB (% TS)** | 0.0 | -3.5 | 0.0 | 17.4 | 24.4 | 18.9 |

Für die Umrechnung von kJ/kg wurde die folgende Rechnung verwendet: 1 kWh = 3.600 kJ.

Es erfolgten weitere Untersuchungen von Holzpellets. Dazu wurden Pellets hergestellt, die auch größere Grießfraktionen bis 2,0 mm berücksichtigen.

In einer anderen Reihe wurden Pellets mit Braunkohle als fossilem Kohlerohstoff hergestellt, um Unterschiede zwischen Kohlearten aufzuzeigen.

Nachfolgende Tabelle 4 betrifft eine Übersicht zu den Anteilen verschiedener Kohlen für die Nachuntersuchung.

**Tabelle 4:**

| | **Muster 1** | **Muster 2** |
|---|---|---|
| Anteil Holzkohle 0,5mm - 1,2mm (%) | 20,0 | 30,0 |
| Anteil Holzkohle 1,2mm - 2,0mm (%) | 20,0 | 30,0 |
| Anteil Braunkohle 0,0mm - 0,5mm (%) | 20,0 | -/- |
| Anteil Braunkohle 0,5mm - 1,2mm (%) | 20,0 | -/- |
| Anteil Braunkohle 1,2mm - 2,0mm (%) | 20,0 | -/- |

### Durchführung:

Für die Untersuchung von Holzpellets wurde das Paket PFR0C in Verbindung mit dem Vorbereitungstest FR161 bei EuroFins (www.eurofins.de, Analytik-Labor) verwendet. In diesem werden, neben der Bestimmung von Wassergehalten und Asche, auch verschiedene Elementgehalte sowie der Brennwert ermittelt.

### Beobachtungen und Ergebnisse:

Nachfolgende Nomenklatur wird für die Ergebnisse verwendet:
K = Holzkohle;
BK = Braunkohle;
TS = Trockensubstanz;
HuB = Betriebsheizwert, also Heizwert unter Betrieb.

### a) Ergebnisse zur Abgrenzung der Kohle-Größe:

Nachfolgende Tabelle 5 zeigt Ergebnisse von EuroFins zu den Wasser - sowie den Aschegehalten

**Tabelle 5:**

| | **0% HK** | **< 0,5mm 20% HK** | **0,5mm 1,2mm 20% HK** | **1,2mm 2,0mm 20% HK** | **< 0,5mm 30% HK** | **0,5mm 1,2mm 30% HK** | **1,2mm 2,0mm 30% HK** |
|---|---|---|---|---|---|---|---|
| **Wassergehalt (%)** | 12,3 | 7,3 | 11,4 | 12,3 | 9,0 | 13,4 | 5,6 |
| **Aschegehalt (%)** | 0,4 | 0,8 | 1,0 | 0,7 | 0,8 | 0,9 | 0,8 |
| **Aschegehalt (% TS)** | 0,6 | 0,8 | 1,1 | 0,8 | 0,9 | 1,1 | 0,9 |

### Bewertung:

Die Aschegehalte sind weitestgehend stabil und schwanken nicht durch die verwendete Geometrie.

Nachfolgende Tabelle 6 zeigt Ergebnisse von EuroFins zu den verschiedenen Elementgehalten.

**Tabelle 6:**

| | **0% HK** | **< 0,5mm 20% HK** | **0,5mm - 1,2mm 20% HK** | **1,2mm - 2,0mm 20% HK** | **< 0,5mm 30% HK** | **0,5mm - 1,2mm 30% HK** | **1,2mm - 2,0mm 30% HK** |
|---|---|---|---|---|---|---|---|
| **Schwefel (m%)** | 0,010 | 0,009 | 0,012 | 0,018 | 0,015 | 0,012 | 0,0 |
| **Schwefel (m% TS)** | 0,012 | 0,010 | 0,014 | 0,021 | 0,016 | 0,013 | 0,0 |
| **Stickstoff (m%)** | 0,18 | 0,21 | 0,12 | 0,05 | 0,22 | 0,05 | 0,1 |
| **Stickstoff (m% TS)** | 0,21 | 0,22 | 0,13 | 0,06 | 0,24 | 0,05 | 0,1 |
| **Kohlenstoff (m%)** | 46,1 | 53,8 | 52,2 | 50,9 | 56,3 | 54,5 | 58,6 |
| **Kohlenstoff (m% TS)** | 54,8 | 58,0 | 58,9 | 58,0 | 61,9 | 62,9 | 62,1 |
| **Wasserstoff (m%)** | 5,0 | 5,2 | 4,6 | 4,7 | 4,9 | 4,4 | 4,8 |
| **Wasserstoff (m% TS)** | 5,9 | 5,6 | 5,2 | 5,4 | 5,3 | 5,1 | 5,1 |
| **Sauerstoff (m%)** | 32,4 | 32,7 | 30,7 | 31,4 | 28,7 | 26,7 | 30,0 |
| **Sauerstoff (m% TS)** | 38,4 | 35,3 | 34,6 | 35,8 | 31,6 | 30,9 | 31,8 |

### Bewertung:

Die verwendete Holzkohle-Geometrie hat keinen nennenswerten Einfluss auf die Parameter der Tabelle 6.

Nachfolgende Tabelle 7 zeigt Ergebnisse von EuroFins zum Brenn- und Heizwert. Für die Umrechnung von kJ/kg wurde die folgende Rechnung verwendet: 1 kWh = 3.600 kJ.

**Tabelle 7:**

| | **0% HK** | **< 0,5mm 20% HK** | **0,5mm - 1,2mm 20% HK** | **1,2mm - 2,0mm 20% HK** | **< 0,5mm 30% HK** | **0,5mm - 1,2mm 30% HK** | **1,2mm - 2,0mm 30% HK** |
|---|---|---|---|---|---|---|---|
| **Brennwert (kJ/kg)** | 18000 | 19700 | 20200 | 20000 | 22500 | 21600 | 22800,0 |
| **Brennwert (kJ/kg TS)** | 21400 | 21300 | 22800 | 22800 | 24700 | 24900 | 24200,0 |
| **Heizwert HuB (kJ/kg)** | 16600 | 18400 | 18900 | 18700 | 21200 | 20300 | 21700,0 |
| **Heizwert HuB (kJ/kg TS)** | 20100 | 20100 | 21700 | 21600 | 23600 | 23800 | 23100,0 |
| | | | | | | | |
| **Brennwert (kWh/kg)** | 5,00 | 5,47 | 5,61 | 5,56 | 6,25 | 6,00 | 6,33 |
| **Brennwert (kWh/kg TS)** | 5,94 | 5,92 | 6,33 | 6,33 | 6,86 | 6,92 | 6,72 |
| **Heizwert HuB (kWh/kg)** | 4,61 | 5,11 | 5,25 | 5,19 | 5,89 | 5,64 | 6,03 |
| **Heizwert HuB (kWh/kg TS)** | 5,58 | 5,58 | 6,03 | 6,00 | 6,56 | 6,61 | 6,42 |

| **Änderung Δ im Vergleich zum Muster ohne Holzkohle:** | | | | | | | |
|---|---|---|---|---|---|---|---|
| **Δ Brennwert (%)** | 0,0 | 9,4 | 12,2 | 11,1 | 25,0 | 20,0 | 26,7 |
| **Δ Brennwert (% TS)** | 0,0 | -0,5 | 6,5 | 6,5 | 15,4 | 16,4 | 13,1 |
| **Δ Heizwert HuB (%)** | 0,0 | 10,8 | 13,9 | 12,7 | 27,7 | 22,3 | 30,7 |
| **Δ Heizwert HuB (% TS)** | 0,0 | 0,0 | 8,0 | 7,5 | 17,4 | 18,4 | 14,9 |

### Bewertung:

Hier zeigt sich deutlich ein Einfluss der Holzkohlegeometrie: 0,5 mm - 1,2 mm haben bei beiden Anteilen Holzkohle die höchste Änderung des Brennwertes zur Holzkohle - freien Referenz.

### b) Ergebnisse zur Abgrenzung der Kohle-Quelle als Brennwert-Booster:

Nachfolgende Tabelle zeigt Ergebnisse von EuroFins zu den Wassergehalten sowie den Aschegehalten von Pellets mit Holz- und Braunkohle.

**Tabelle 8:**

| | **0% HK** | **< 0,5mm 20% HK** | **0,5mm 1,2mm 20% HK** | **1,2mm 2,0mm 20% HK** | **< 0,5mm 20% BK** | **0,5mm 1,2mm 20% BK** | **1,2mm 2,0mm 20% BK** |
|---|---|---|---|---|---|---|---|
| **Wassergehalt (%)** | 12,3 | 7,3 | 11,4 | 12,3 | 14,0 | 7,4 | 8,7 |
| **Aschegehalt (%)** | 0,4 | 0,8 | 1,0 | 0,7 | 0,7 | 1,1 | 1,2 |
| **Aschegehalt (% TS)** | 0,6 | 0,8 | 1,1 | 0,8 | 0,8 | 1,2 | 1,2 |

Bewertung: Pellets mit Braunkohle besitzen höhere Aschegehalte und haben damit Vorteil gegenüber der Holzkohle.

Nachfolgende Tabelle 9 zeigt Ergebnisse von EuroFins zu den verschiedenen Elementgehalten von Pellets mit Holz- und Braunkohle.

**Tabelle 9:**

| | **0% HK** | **< 0,5mm 20% HK** | **0,5mm - 1,2mm 20% HK** | **1,2mm - 2,0mm 20% HK** | **< 0,5mm 20% BK** | **0,5mm - 1,2mm 20% BK** | **1,2mm - 2,0mm 20% BK** |
|---|---|---|---|---|---|---|---|
| **Schwefel (m%)** | 0,010 | 0,009 | 0,012 | 0,018 | 0,046 | 0,050 | 0,044 |
| **Schwefel (m% TS)** | 0,012 | 0,010 | 0,014 | 0,021 | 0,053 | 0,054 | 0,048 |
| **Stickstoff (m%)** | 0,18 | 0,21 | 0,12 | 0,05 | 0,21 | 0,15 | 0,14 |
| **Stickstoff (m% TS)** | 0,21 | 0,22 | 0,13 | 0,06 | 0,25 | 0,16 | 0,15 |
| **Kohlenstoff (m%)** | 46,1 | 53,8 | 52,2 | 50,9 | 45,7 | 49,9 | 48,8 |
| **Kohlenstoff (m% TS)** | 54,8 | 58,0 | 58,9 | 58,0 | 53,1 | 53,9 | 53,4 |
| **Wasserstoff (m%)** | 5,0 | 5,2 | 4,6 | 4,7 | 5,0 | 5,2 | 5,3 |
| **Wasserstoff (m% TS)** | 5,9 | 5,6 | 5,2 | 5,4 | 5,8 | 5,6 | 5,9 |
| **Sauerstoff (m%)** | 32,4 | 32,7 | 30,7 | 31,4 | 34,3 | 36,2 | 35,8 |
| **Sauerstoff (m% TS)** | 38,4 | 35,3 | 34,6 | 35,8 | 40,0 | 39,1 | 39,2 |

### Bewertung:

Holzpellets mit Braunkohle besitzen mehr Schwefel als Pellets mit Holzkohle, so dass Holzkohle bevorzugt ist. Holzpellets mit Braunkohle besitzen weniger Kohlenstoff als Pellets mit Holzkohle, so dass Holzkohle bevorzugt ist Folglich ergibt sich im Zusammenhang mit der Erfindung die Erkenntnis, dass Holzkohle verschiedene und signifikante Vorteile gegenüber Braunkohle aufweist.

Nachfolgende Tabelle 10 zeigt Ergebnisse von EuroFins zum Brenn- und Heizwert von Pellets mit Holz- und Braunkohle. Für die Umrechnung von kJ/kg wurde die folgende Rechnung verwendet: 1 kWh = 3.600 kJ

**Tabelle 10:**

| | **0% HK** | **< 0,5mm 20% HK** | **0,5mm - 1,2mm 20% HK** | **1,2mm - 2,0mm 20% HK** | **< 0,5mm 20% BK** | **0,5mm - 1,2mm 20% BK** | **1,2mm - 2,0mm 20% BK** |
|---|---|---|---|---|---|---|---|
| **Brennwert (kJ/kg)** | 18000 | 19700 | 20200 | 20000 | 18300 | 19900 | 19500 |
| **Brennwert (kJ/kg TS)** | 21400 | 21300 | 22800 | 22800 | 21300 | 21500 | 21300 |
| **Heizwert HuB (kJ/kg)** | 16600 | 18400 | 18900 | 18700 | 16900 | 18600 | 18100 |
| **Heizwert HuB (kJ/kg TS)** | 20100 | 20100 | 21700 | 21600 | 20000 | 20200 | 20100 |
| | | | | | | | |
| **Brennwert (kWh/kg)** | 5,00 | 5,47 | 5,61 | 5,56 | 5,08 | 5,53 | 5,42 |
| **Brennwert (kWh/kg TS)** | 5,94 | 5,92 | 6,33 | 6,33 | 5,92 | 5,97 | 5,92 |
| **Heizwert HuB (kWh/kg)** | 4,61 | 5,11 | 5,25 | 5,19 | 4,69 | 5,17 | 5,03 |
| **Heizwert HuB (kWh/kg TS)** | 5,58 | 5,58 | 6,03 | 6,00 | 5,56 | 5,61 | 5,58 |

| **Änderung Δ im Vergleich zum Muster ohne Holzkohle:** | | | | | | | |
|---|---|---|---|---|---|---|---|
| **Δ Brennwert (%)** | 0,0 | 9,4% | 12,2% | 11,1% | 1,7% | 10,6% | 8,3% |
| **Δ Brennwert (% TS)** | 0,0 | -0,5% | 6,5% | 6,5% | -0,5% | 0,5% | -0,5% |
| **Δ Heizwert HuB (%)** | 0,0 | 10,8% | 13,9% | 12,7% | 1,8% | 12,0% | 9,0% |
| **Δ Heizwert HuB (% TS)** | 0,0 | 0,0% | 8,0% | 7,5% | -0,5% | 0,5% | 0,0% |

### Bewertung:

Holzpellets, die mit Braunkohle versetzt wurden, besitzen zwar höhere Brenn- und Heizwerte als die Kohle-freie Referenz, aber bezogen auf die Trockensubstanz zeigt sich diese Erhöhung nicht
Bei Holzkohle erhöhen sich Brenn- und Heizwert auch bezogen auf die Trockensubstanz, so dass Holzkohle zu bevorzugen ist.

### Zusammenfassung/Fazit:

1. Abgrenzung der Kohle-Größe:
   - Holzkohlegrieß im Bereich < 0,5 mm bildet ein inhomogenes Gemisch mit Holzspänen, welches schwerer zu verarbeiten ist.
   - Holzkohlegrieß im Bereich 1,2 mm bis 2,0 mm bildet ein inhomogenes Gemisch mit Holzspänen, welches schwerer zu verarbeiten ist.
   - Bei Holzkohlegrieß im Bereich 0,5 mm bis 1,2 mm sind die durchschnittlichen Partikelgrößen von Holzspänen sehr ähnlich und bilden ein gut zu verarbeitendes Gemisch. Es hat dadurch den stärksten Einfluss auf die Brenn- und Heizwerte. Dies kann daran liegen, dass bei dieser Größe die Kohlestücke gut verpresst werden können und so ein insgesamt homogeneres Verhältnis zwischen Holzspänen und Holzkohle im fertigen Pellet erzeugt wird.
2. Abgrenzung der Kohle-Quelle als Brennwert-Booster:
   - Holzkohle besitzt weniger Schwefel als Braunkohle. Bei der Verbrennung von schwefelhaltigen Brennstoffen kann in Gegenwart von Wasser die Substanz Schwefelsäure entstehen, die zu höherem Verschleiß am Ofen führen kann, z.B. durch Bildung von Rost.
   - Holzkohle als Additiv erhöht, bezogen auf die Trockensubstanz des fertigen Pellets, die Brenn- und Heizwerte. Dies ist auf den höheren Anteil Kohlenstoff zurückzuführen, der durch die Holzkohle in das Pellet eingetragen wird. Die Braunkohle verändert den Kohlenstoffgehalt nur minimal und führt damit regelmäßig nicht zu einer Erhöhung der Brennleistung im Pellet, bezogen auf die Trockensubstanz.
3. Abgrenzung/Vorteile der Erfindung im Vergleich zu bekannten Verfahren:
   - Es werden Weichholz-Späne, wie z.B. Fichte/Kiefer/Tanne, als Grundlage von Holzpellets vorgeschlagen.
   - Es wird Hartholz-Holzkohle, wie z.B. Buche/Eiche/Esche/Ahorn, als Brennwert-Booster vorgeschlagen (vgl. Ergebnisse oben).
   - Es wird Hartholz-Holzkohle als nachhaltige und Schwefelarme Kohlequelle gegenüber fossilen Kohlen wie Braunkohle und Steinkohle vorgeschlagen.
   - Es wird ein definierter Bereich der Holzkohle-Größe mit z.B. 0,5 mm bis 1,2 mm; ggf. auch bis 1,5 mm, vorgeschlagen.
   - Es wird ein definierter Bereich der Holzkohlemenge, z.B. 15% bis 40% Gew.-%, vorgeschlagen.

Fachleuten auf dem technischen Gebiet der Erfindung ist klar, dass die oben beschriebenen repräsentativen Ausführungsformen und Details der Erfindung nur zur Veranschaulichung der vorliegenden Erfindung dienen sollen, und dass verschiedene Abänderungen und Modifikationen vorgenommen werden können, ohne dadurch den Schutzbereichs der Erfindung, wie er in den beigefügten Ansprüchen definiert ist, zu verlassen.

## Patentansprüche

1. Verfahren zur Herstellung von Holzbrennstoffen, umfassend zumindest die folgenden Schritte:
a) Vermengen von Rohholzmaterialpartikeln mit bis zu 50 Gew.-%, bezogen auf das Rohholzmaterial, mindestens einer feinfraktionierten Kohle mit einer Korngröße von 100 µm bis 2000 µm und optional eines Bindemittel zum Erhalt eines Feststoffgemisches,
b) Vermengen des Feststoffgemischs mit Wasser zum Erhalt eines feuchten Feststoffgemisches,
c) Verpressen des feuchten Feststoffgemisches in einer Presse zu Holzbrennstoff-Rohlingen,
d) Aushärten der Holzbrennstoff-Rohlinge durch Abkühlung.

2. Verfahren nach Anspruch 1, bei dem in Schritt a) 15 bis 40 Gew.-%, bezogen auf das Rohholzmaterial, der mindestens einen feinfraktionierten Kohle verwendet werden.

3. Verfahren nach einem der vorstehenden Ansprüche, bei dem in Schritt a) mindestens eine feinfraktionierte Kohle mit einer Korngröße von 500 µm bis 1.200 µm verwendet wird.

4. Verfahren nach einem der vorstehenden Ansprüche, bei dem das Rohholzmaterial vor Schritt a) bei 50 °C bis maximal 120 °C getrocknet wird.

5. Verfahren nach einem der vorstehenden Ansprüche, bei dem das Rohholzmaterial unter Harthölzern, Weichhölzern und Kombinationen daraus ausgewählt wird.

6. Verfahren nach einem der vorstehenden Ansprüche, bei dem dem Rohholzmaterial als optionales Bindemittel bis zu 5.0 Gew.-% mindestens einer pflanzlichen Stärke zugegeben wird.

7. Verfahren nach Anspruch 6, bei dem die pflanzliche Stärke unter Weizenstärke, Maisstärke, Erbsenstärke und Kombinationen daraus ausgewählt wird.

8. Verfahren nach einem der vorstehenden Ansprüche, bei dem die feinfraktionierte Kohle unter Holzkohlenstaub, Kokosnussschalenstaub, Braunkohlenstaub, Steinkohlenstaub und Kombinationen daraus ausgewählt wird.

9. Verfahren nach einem der vorstehenden Ansprüche, bei dem bis zu 5 % mindestens eines Diols und/oder mindestens eines Polyols zur Verbesserung der Schmierung beigemengt werden.

10. Verfahren nach Anspruch 9, bei dem das Diol und/oder das Polyol unter Ethylenglycol und Propylenglykol ausgewählt wird.

11. Verfahren nach einem der vorstehenden Ansprüche, bei dem in Schritt b) ein Gesamtfeuchtegehalt des Feststoffgemisches von 5 Gew.-% bis 25 Gew.-% eingestellt wird.

12. Verfahren nach einem der vorstehenden Ansprüche, wobei die hergestellten Holzbrennstoffe als Holzpellets oder Holzbriketts ausgestaltet sind.
